Europäisches Patentamt

European Patent Office

Office européen des brevets

(11) Veröffentlichungsnummer: **0 426 038 A2**

## (12) EUROPÄISCHE PATENTANMELDUNG

(21) Anmeldenummer: 90120604.5

(22) Anmeldetag: 26.10.90

(51) Int. Cl.5: **B29C 45/20**

(30) Priorität: 31.10.89 DE 8912884 U

(43) Veröffentlichungstag der Anmeldung:
08.05.91 Patentblatt 91/19

(84) Benannte Vertragsstaaten:
CH DE ES FR GB IT LI

(71) Anmelder: **Siemens Aktiengesellschaft**
**Wittelsbacherplatz 2**
**W-8000 München 2(DE)**

(72) Erfinder: **Richter, Martin, Dipl.-Ing. (FH)**
**Schulstrasse 20**
**W-8525 Marloffstein(DE)**
Erfinder: **Münch, Werner**
**Bühelnstrasse 32**
**W-8400 Regensburg-Harting(DE)**

(54) Spritzdüse für Spritzgiess-Einrichtungen.

(57) Derartige Einrichtungen bestehen aus einer Spritzmaschine zur Erzeugung und einem Spritzwerkzeug zur Aufnahme des flüssigen Spritzgutes, wobei die Spritzdüse auf die Spritzmaschine mit Dosierzylinder und demgegenüber relativ verschiebbarer Schnecke angeordnet ist und einen zentrischen Spritzkanal aufweist, dessen Öffnung für den Spritzgießvorgang an die Einspritzöffnung des Werkzeuges aufsetzbar ist. Erfindungsgemäß verläuft der Spritzkanal (11, 21, 31, 41) konisch und hat der Spritzkanal (11, 21) an seinem Fußpunkt einen größeren Durchmesser ($D_0$) als der Durchmesser ($D_1$) des sich im Düsenkopf anschließenden Dosierkanals (3). Vorzugsweise verläuft der Spritzkanal (11, 21, 31) über seine gesamte Länge konisch.

FIG 1

## SPRITZDÜSE FÜR SPRITZGIESS-EINRICHTUNGEN

Die Erfindung bezieht sich auf eine Spritzdüse für Spritzgieß-Einrichtungen, die aus einem Spritzaggregat zur Erzeugung und einem Spritzwerkzeug zur Aufnahme des flüssigen Spritzgutes bestehen, wobei die Spritzdüse austauschbar an einen Düsenkopf des Aggregates mit Dosierkanal und demgegenüber relativ verschiebbarer Schnecke angeordnet ist, und einen zentrischen Spritzkanal aufweist, dessen Öffnung für den Spritzgießvorgang an die Einspritzöffnung des Werkzeuges aufsetzbar ist.

Beim Spritzgießen von Kunststoff-Formteilen kommt es darauf an, den flüssig gemachten Kunststoff dosiert in das Werkzeug einzuspritzen. Hierzu weisen die Spritzmaschinen üblicherweise einen Dosierzylinder und eine Schnecke auf, wobei durch Drehung und Vorschub der Schnecke eine geeignete Menge Kunststoff aus der Düsenöffnung des Spritzwerkzeuges ausgestoßen wird.

Es ist bereits aus der DE-C-17 79 239 eine Plastifizier-und Einspritzvorrichtung für plastische Massen mit einer einen axialen Schub auf eine Förderschnecke ausübenden Verschiebevorrichtung bekannt, bei der das Spritzwerkzeug mit Preßkolben und Schnecke gegenüber dem Dosierzylinder relativ verschiebbar ist. Die Spitze des Dosierzylinders dient hierbei gleichzeitig als Spritzdüse. Häufig werden aber austauschbare Spritzdüsen einem stationären Düsenkopf mit zylindrischem Dosierkanal vorgeschaltet, die einen engen Spritzkanal aufweisen.

Nachteilig ist bei den bekannten Anordnungen, daß in der Praxis des Fertigungsbetriebes Materialaustritte an der offenen Spritzdüse erfolgen, die mit der Zeit verkrusten. Letzteres kann zu Werkzeuganlageproblemen und Undichtheiten führen, wobei die Ablagerungen des Materials zum Teil wieder in den Spritzkanal gelangen und mitgerissen werden. Dadurch können sich verhärtete, isolierte Einschlüsse im Produkt bilden, die zu Ausschuß bei den Fertig-Formteilen führen.

Aufgabe der Erfindung ist es daher, austauschbare Spritzdüsen für Spritzgieß-Einrichtungen so zu verbessern, daß Ablagerungen weitgehend vermieden werden.

Die Aufgabe ist erfindungsgemäß dadurch gelöst, daß bei einer Spritzdüse der eingangs genannten Art der Spritzkanal konisch verläuft und daß der Spritzkanal in seinem Fußpunkt einen größeren Durchmesser hat als der Durchmesser des sich im Düsenkopf anschließenden Dosierkanals. Vorzugsweise verläuft der Spritzkanal über seine gesamte Länge konisch.

Bei einer erfindungsgemäß ausgebildeten Spritzdüse kann der Neigungswinkel des konischen Spritzkanals sich vorteilhafterweise über seine axiale Länge ändern, wobei die Änderung des Neigungswinkels vorzugsweise diskontinuierlich erfolgt. Dabei ändert sich der Neigungswinkel des konischen Spritzkanals vom Fußpunkt ausgehend von einem kleineren Wert zu einem größeren Wert, wobei der Bereich des größeren Neigungswinkels im vorderen Drittel des Spritzkanales liegt.

In anderer Ausbildung der Erfindung kann die Änderung des Neigungswinkels kontinuierlich erfolgen, wobei der Neigungswinkel im Bereich des Fußpunktes auch Null betragen kann. Dadurch wird insbesondere der Einsatz eines Drucksensors vereinfacht. In diesem Fall ist aber vorteilhafterweise der Dosierkanal im Düsenkopf selbst konisch ausgebildet, um die erfindungsgemäße Wirkung zu erreichen.

Es hat sich gezeigt, daß durch die spezielle Formgebung des Spritzkanals nach dem Zurückdrehen und der zur Kompressionsentlastung erfolgten Rückwärtsbewegung der Schnecke im Dosierzylinder ein wesentlich höherer Unterdruck als bei Verwendung von Spritzdüsen des Standes der Technik entsteht. Durch diesen höheren Unterdruck verbleibt das flüssige Kunststoffmaterial im Spritzdüsenkanal und kann nicht mehr auslaufen. Dadurch ergibt sich eine erhebliche Qualitätsverbesserung bei der Fertigung von Formteilen durch Spritzgießen.

Weitere Einzelheiten und Vorteile der Erfindung ergeben sich aus der nachfolgenden Figurenbeschreibung von Ausführungsbeispielen anhand der Zeichnung. Es zeigen jeweils in schematischer Querschnittsdarstellung

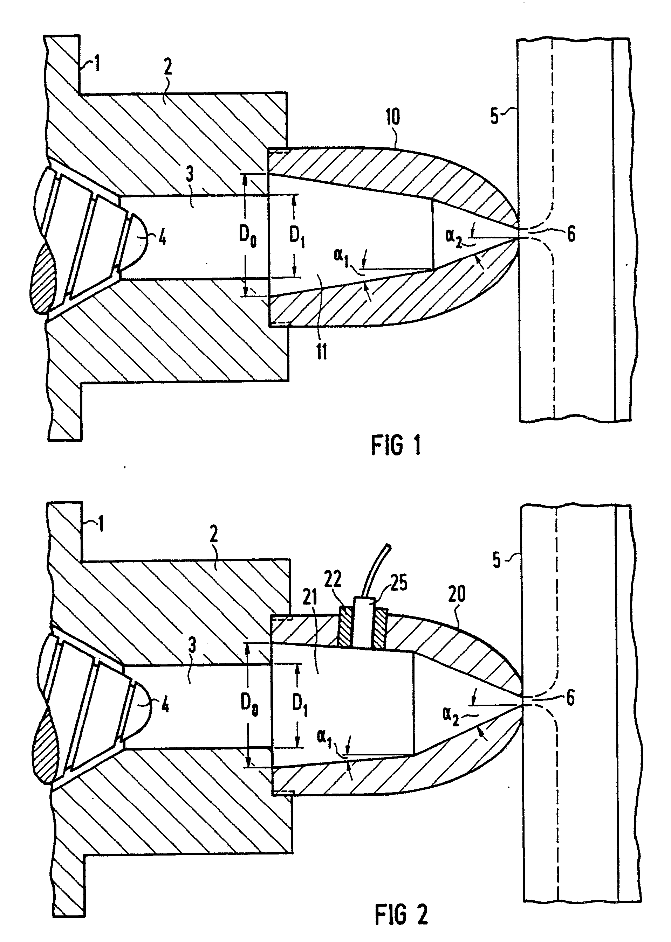

die FIG 1 bis FIG 4 unterschiedliche Ausführungsbeispiele von Spritzdüsen als Funktionsteil in einer Spritzgieß-Einrichtung zwischen Spritzaggregat und Werkzeug.

Die Figuren sind nicht maßstäblich gezeichnet. Sie werden nachfolgend teilweise zusammen beschrieben.

In allen Figuren bedeutet 1 ein Spritzaggregat, das funktionsseitig einem Düsenkopf 2 mit Dosierkanal 3 und rückseitig eine in einem Zylinder geführte Schnecke 4 aufweist. Dem Düsenkopf 2 ist in FIG 1 eine Spritzdüse 10 und in FIG 2 eine Spritzdüse 20 vorgeschaltet, die jeweils austauschbar sind und über Schraubgewinde im Düsenkopf 2 form- und kraftschlüssig verankert werden. Die Spritzdüse 10 hat einen inneren Spritzkanal 11, die Spritzdüse 20 einen inneren Spritzkanal 21. In FIG 2 ist im rückwärtigen Teil des Spritzkanales 21 eine Abzweigung 22 eingebracht, in die ein Drucksensor 25 zur Erfassung des Drucks des flüssigen Kunststoffes eingesetzt ist.

Beim Fertigungsvorgang wird die Spitze der Spritzdüse 10 bzw. 20 an ein Werkzeug 5 angesetzt, das über den Einlaß 6 mit flüssigem Material gefüllt werden soll. Über einen dosierten Schuß des Spritzaggregates 1 wird das Werkzeug 5 mit dem erhitzten und flüssigen Spritzgut gefüllt. Nach dem Erkalten kann das Werkzeug 5 geöffnet und ein Formteil entnommen werden.

Bei der Massenfertigung von Formteilen wird typischerweise folgendermaßen vorgegangen: Vor der Füllung wird die Spritzmaschine mit Dosierzylinder um eine geringe Strecke, beispielsweise etwa 30 mm vorgefahren, so daß die Spitze der Spritzdüse 10 bzw. 20 mit großer Kraft am zu füllenden Werkzeug 5 anliegt. Zum Füllen des Werkzeuges erfolgt der Schuß mit flüssigem Material in die Einlaßöffnung 6 des Werkzeuges 5. Unmittelbar nach dem Schuß und der Dosierung, nicht der Kompressionsentlastung wird das Spritzaggregat wieder um eine entsprechende Strecke zurückgefahren. Gleichzeitig wird auch die Schnecke 3 im Zylinder 2 um einen bestimmten Weg zurückgenommen, um im Spritzkanal einen Unterdruck zu erzeugen. Dieser Unterdruck gewährleistet, daß aus der zurückgezogenen offenen Düse 10 bzw. 20 kein flüssiges Material ausläuft.

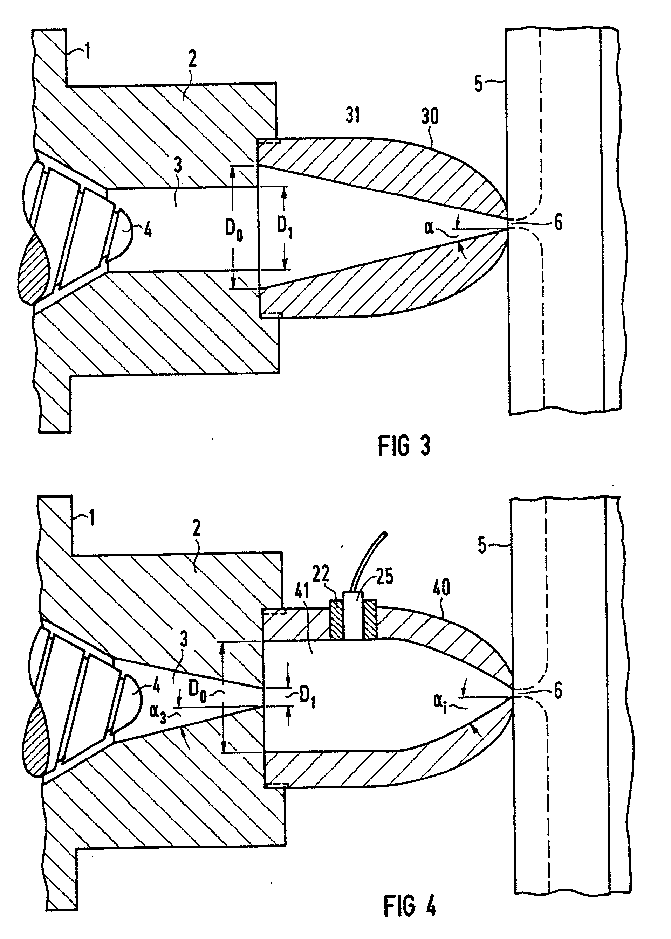

In FIG 3 ist eine Spritzdüse 30 mit Spritzkanal 31 derart konisch ausgebildet, daß über die gesamte Länge des konischen Spritzkanals 31 ein konstanter Steigungswinkel $\alpha$ vorliegt. Derartige Spritzdüsen 30 sind fertigungstechnisch leicht herstellbar.

In FIG 4 ist eine Spritzdüse 40 mit Spritzkanal 41 aus der Spritzdüse 20 gemäß FIG 2 derart weitergebildet, daß ein konischer Spritzkanal 41 mit sich kontinuierlich ändernden Steigungswinkel $\alpha_i$ gebildet ist. Dabei liegt im vorderen Teil der Spritzdüse 40 die größte Steigung und zum Düsenkopf 2 hin die geringste Steigung vor, die auch gleich Null sein kann. Letzteres ist vorteilhaft, um den Drucksensor in einfacher Weise einsetzen zu können. In diesem Fall kann es weiterhin vorteilhaft sein, auch den Dosierkanal 3 im Düsenkopf 2 konisch zulaufen zu lassen. Dessen Steigungswinkel $\alpha_3$ hat dabei einen Mittelwert des Steigungswinkels $\alpha_i$ im Spritzkanal 41.

Die in den FIG 1 bis FIG 4 dargestellten Spritzdüsen 10 bis 40 haben einen derart speziell ausgestalteten Spritzkanal, daß an seinem Fußpunkt ein größerer Durchmesser $D_0$ als der Durchmesser $D_1$ des sich im Düsenkopf 2 anschließenden Dosierkanals 3 vorliegt. Dadurch wird ein besonders hoher Unterdruck gebildet, so daß beim Zurücknehmen der Schnecke das flüssige Material im Spritzdüsenkanal verbleibt. In diesem Zusammenhang ist es von Bedeutung, daß der Neigungswinkel $\alpha_1$ der äußeren Wandung des Spritzkanals gegenüber der Längsachse im hinteren Teil der Spritzdüse 10 bzw. 20, 30 oder 40 geringer ist als der Neigungswinkel $\alpha_2$ im vorderen Teil der Spritzdüse 10 bzw. 20, 30 oder 40. Wenn ein Drucksensor zur Drucküberwachung des flüssigen Spritzgutes verwendet wird, ist dieser vorteilhafterweise im Bereich des geringeren Neigungswinkels angeordnet, so daß kein wesentlicher Meßfehler entsteht. Dafür ist in FIG 2 die Steigung im hinteren Bereich des Spritzkanals gering.

Es hat sich gezeigt, daß bei Verwendung der beschriebenen Spritzdüsen die Qualität der Fertigformteile verbessert wird, da sich keine Ablagerungen bilden können. Dabei ist vorteilhaft, daß nunmehr auch das ständige Reinigen der Düsenspitzen aller Maschinen von Ablagerungen entfallen kann, wozu bisher häufig ein Schweißbrenner eingesetzt werden mußte.

**Ansprüche**

1. Spritzdüse für Spritzgieß-Einrichtungen, die aus einem Spritzaggregat zur Erzeugung und einem Spritzwerkzeug zur Aufnahme des flüssigen Spritzgutes bestehen, wobei die Spritzdüse austauschbar an einem Düsenkopf des Spritzaggregates mit Dosierkanal und demgegenüber relativ verschiebbarer Schnecke angeordnet ist und einen zentrischen Spritzkanal aufweist, dessen Öffnung für den Spritzgießvorgang an die Einspritzöffnung des Werkzeuges aufsetzbar ist, **dadurch gekennzeichnet,** daß der Spritzkanal (11, 21, 31, 41) konisch verläuft und daß der Spritzkanal (11, 21, 31, 41) an seinem Fußpunkt einen größeren Durchmesser ($D_0$) hat als der Durchmesser ($D_1$) des sich im Düsenkopf (2) anschließenden Dosierkanals (3).

2. Spritzdüse nach Anspruch 1, **dadurch gekennzeichnet,** daß der Spritzkanal (11, 21, 31) über seine gesamte Länge konisch verläuft.

3. Spritzdüse nach Anspruch 1, **dadurch gekennzeichnet,** daß der Neigungswinkel ($\alpha$) des konischen Spritzkanals (11, 21, 31, 41) sich über seine axiale Länge ändert.

4. Spritzdüse nach Anspruch 3, **dadurch gekennzeichnet,** daß die Änderung des Neigungswinkels ($\alpha$) diskontinuierlich erfolgt.

5. Spritzdüse nach Anspruch 3, **dadurch gekennzeichnet,** daß die Änderung des Neigungswinkels ($\alpha_i$) kontinuierlich erfolgt.

6. Spritzdüse nach Anspruch 4 und 5, **dadurch gekennzeichnet,** daß sich der Neigungswinkel ($\alpha$) des konischen Spritzkanals vom Fußpunkt ausgehend von einem kleineren Wert ($\alpha_1$) zu einem größeren Wert ($\alpha_2$) ändert.

7. Spritzdüse nach Anspruch 5 und 6, **dadurch gekennzeichnet,** daß im Bereich des Fußpunktes der Neigungswinkel ($\alpha_i$) gleich Null ist.

8. Spritzdüse nach Anspruch 4 oder 5, **dadurch**

gekennzeichnet, daß der Bereich des größten Neigungswinkels ($\alpha_2$) im vorderen Drittel des Spritzkanals (11, 21, 31, 41) liegt.

9. Spritzdüse nach Anspruch 7, **dadurch gekennzeichnet**, daß im Bereich des geringsten Neigungswinkels ($\alpha_1$) des konischen Spritzkanals (21) eine Abzweigung (22) für den Einsatz eines Drucksensors (25) vorhanden ist.

10. Spritzdüse nach einem der vorhergehenden Ansprüche, **dadurch gekennzeichnet,** daß zusätzlich der Dosierkanal (3) im Düsenkopf (2) konisch ausgebildet ist, wobei dessen Neigungswinkel ($\alpha_3$) etwa einem mittleren Neigungswinkel ($\alpha_i$) im Spritzkanal (41) entspricht.

FIG 1

FIG 2

FIG 3

FIG 4